# EUROPEAN PATENT SPECIFICATION

(11) **EP 2 394 135 B1**
(45) Date of publication and mention of the grant of the patent: **27.11.2013**
(21) Application number: 10711724.4
(22) Date of filing: 04.02.2010
(51) Int. Cl.: G01B 11/06, G01B 9/02

(54) **METHOD AND INSTRUMENT FOR OPTICAL THICKNESS MEASUREMENT OF TRANSPARENT OR SEMITRANSPARENT MATERIALS**
VERFAHREN UND INSTRUMENT ZUR OPTISCHEN DICKENMESSUNG TRANSPARENTER ODER SEMITRANSPARENTER MATERIALIEN
PROCÉDÉ ET INSTRUMENT DE MESURE DE L'ÉPAISSEUR OPTIQUE DE MATÉRIAUX TRANSPARENTS OU SEMI-TRANSPARENTS

(30) Priority: 09.02.2009 IT BS20090020
(43) Date of publication of application: 14.12.2011
(73) Proprietor: Nirox S.r.l., 25010 Acquafredda (BS) (IT)
(72) Inventor: BANDERA, Andrea, I-25010 Acquafredda (Brescia) (IT); DONINI, Maurizio, I-25010 Acquafredda (Brescia) (IT); PASQUALI, Andrea, I-25010 Acquafredda (Brescia) (IT)
(74) Representative: Sangiacomo, Ines
(86) International application number: PCT/IT2010/000035
(87) International publication number: WO 2010/089793

(56) References cited:
- EP-A- 1 596 157
- US-A- 5 850 287
- US-A1- 2005 151 977

## Description

### Field of the invention

This invention generally refers to measuring instruments and especially concerns an instrument and a method for thickness measurement of optically transparent or semitransparent materials in form of films, included particularly in a wide typology.

### Prior art

Films and particularly thin films made up of optically transparent or semitransparent materials, such as plastic or glass here considered, are widely used in a large number of applications. They are usually manufactured through an extrusion process from a starting material, can consist of a single layer or of several superimposed layers and are then wound in reels or cut in strips of various widths. For instance, in plastic extrusion plants, an accurate film thickness measurement is required during production in order to control that the thickness profile of the reel, produced both through cast extrusion lines and through blown extrusion lines, keeps constant within a stated tolerance. This is to avoid waste of material or return of finished product if not consistent with definite specifications. To this end the extrusion plant can be equipped with a thickness measuring instrument fitted to send a feedback signal for the manual or automatic stop of the production line in case of difference.

Generally the instruments used for film thickness measurement are based on different techniques. For instance, still considering the manufacturing plants for plastic material film, instruments based on electromagnetic technologies, mechanical techniques, ionizing-radiation gauging techniques are used.

The instruments using electromagnetic techniques make use of the capacitive or the inductive principle. In both cases they comprise substantially two opposite measurement heads and the film is got to pass between the two measurement heads where it alters an inductive or capacitive electro-magnetic property, which is then detected by the instrument. The conversion of the electric characteristic into thickness information is obtained by using calibration curves obtained through reference samples.

The mechanical techniques are based on the use of a feeler which physically contacts the film, and a mechanical structure feedback element, typically a mechanical return roller.

In ionizing-radiation techniques radioactive sources are used, beta rays or X-rays for instance, which are able to emit a radiation having sufficient energy for crossing any film thickness/coloration combination of production interest, in order to extract thickness information.

For instance, among optical measurement techniques infra-red gauges are used, which convert the optical absorption measurement into a thickness measurement by utilizing spectral lines typical of materials, especially of plastic materials.

Although normally used for thickness measurement, within the sphere of production line control as well, these instruments present some disadvantages.

Particularly electromagnetic techniques are characterised by a low resolution for small film thickness, require accurate calibration procedures and accurate mechanical installation onto handling lines. Moreover the operation principle of capacitive measurement systems cannot be applied to any film types having dielectric constants with values out of certain fields.

As for mechanical techniques, they require necessarily a physical contact between a feeler and the film, which can cause damage to the contact surface.

Ionizing-radiation techniques can be used with any film type, but require the use of radioactive sources, their correct operation is bound up with complex calibration and setting procedures and measurement accuracy depends on the signal-to-noise ratio and decreases in time as radioactive elements are subject to decay. Furthermore radioactive sources presence calls for particular installation and use authorizations, which imply a rise in operating time and costs.

Infra-red technology allows to go beyond some of the limits that characterise the measurement approaches cited above, but needs the use of two opposite measurement heads; if the measurement was carried out in reflection with single head, said one-sided, this would be possible only for films deposited on metallic-standard substrata that can act like a mirror for the optical beam that passes through the material.

The thickness measurement by means of opposite heads can be used in many appliances, for example in cast plastic film extrusion lines, where the plant mechanical lay-out allows installation of the gauge by the two sides of the film to measure. In blown extrusion lines, on the contrary, a one-sided installation is preferable because it can be physically placed closer to the film extrusion head with a consequent reduction of the time constant of the feedback and an improvement of control closed-loop procedure. Therefore in these plants single-head capacitive sensors or sensors with opposite heads can be used, but these have to be placed only after the bubble collapsing frame, thus increasing the feedback time and decreasing the control efficiency.

Therefore up till now there is the need of a non-contact, single-head measuring instrument with high accuracy, fitted to measure continually the thickness of a thin film, directly in production/extrusion lines as well and so characterised by a high integration and compactness level that allows simple installation onto scanning systems needed to obtain the profile of the film thickness.

Optical techniques, and particularly low-coherence interferometry, allow to obtain the desired thickness information with the characteristics cited above; this technique has been successfully used in various applications, among which for instance optical tomography in biomedical ambit (OCT, Optical Coherence Tomography), structural monitoring and characterization of optical fibre transmission lines, whereas in thickness measurement ambit it has been used only for thickness measurement of motionless film and therefore not in production lines.

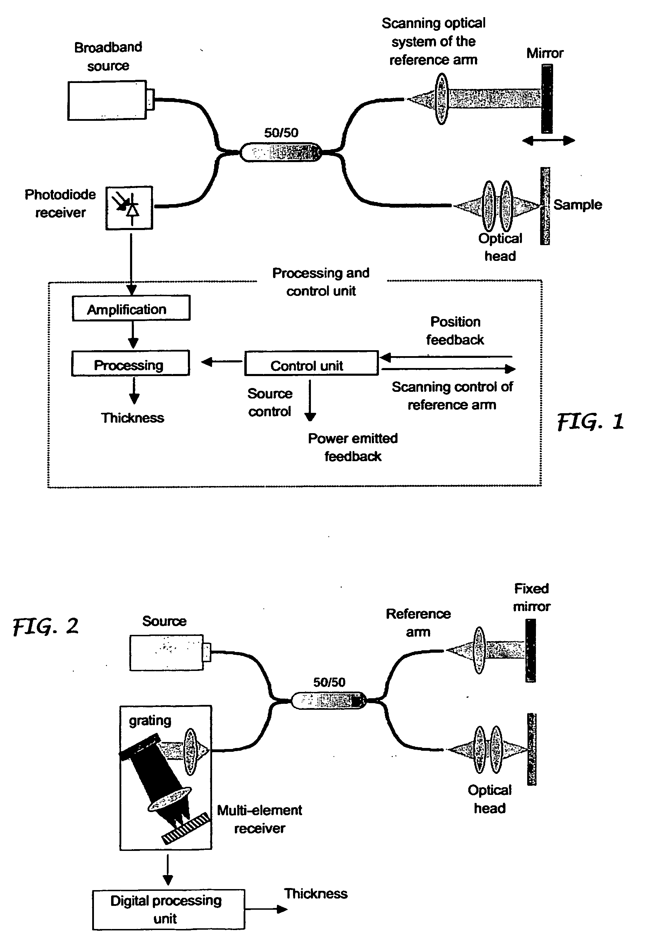

As a matter of fact in the classic carrying out of low-coherence interferometer, the so-called time-domain TD, as shown approximately in the scheme in Fig. 1, the light, generated by a low-coherence source, or broadband source, is split by means of a beam-splitter into two spatially distinct paths, said measurement arm and reference arm, which are respectively directed towards a sample that is under investigation and a reference optical element, typically a mirror. The light that is reflected by the sample and by the optical element is recombined by the same beam-splitter and sent towards a receiver. Along the path from beam-splitter to receiver the two optic beams are spatially superimposed and so give rise to interference phenomena; the optical intensity detected by the receiver results from the addition of single components and of the interferometric component, whose intensity depends on the optical path difference between the two interferometer arms. Particularly this turns out to be maximal when the distances covered along both paths are exactly alike and decreases rapidly to zero when the path difference is bigger than the coherence length of the light source, typically in the order of a few microns. By moving the mirror that borders the reference arm it is possible to map out the positions, inside the material, where pure reflection effects or back-scattering events take place. For instance, considering the case that the object to measure is a homogeneous thin film, it is possible to locate the position of the air-film and film-air interfaces by which part of the incident light is reflected; the distance between the interfaces positions is the thickness information.

A development of this scheme, on the contrary, is denoted as frequency-domain FD - schematized in Fig. 2 - and is characterised by a higher sensitivity and less measurement time as it does not need elements in motion.

As a matter of fact, in such scheme the mirror on the reference arm is kept firm whereas a device able to resolve the spectral components of the interferometric signal is used as detector; the position information and so the thickness information are coded in the intensity of the various spectral components.

Particularly the signal obtained by the receiver results from the addition of three components:
- the first one is the intensity distribution of the optical source,
- the second one is determined by the intensity of the retro-reflections inside the material, whereas
- the third one is the mutual interference, named autocorrelation too, among the various reflections that are present inside the material.

Through carrying out suitable measures and algorithms of signal digital processing, the contributions of the first and the third component are removed and/or reduced, with the objective to concentrate the analysis on the second one, that allows to obtain the position of the various interfaces between air and film or between different layers of the film.

For an effective operation, the carrying out of instrumentation based both on TD and FD techniques requires, however, the use of a complex optical scheme characterised by a critical alignment and the use of sources with "low temporal coherence but high spatial coherence (typically superluminescent diodes SLD). This produces some carrying out complexity that turns into high instrumentation cost. Moreover with regard to FD approach, it is necessary to underline that a relative sample movement in relation to the measurement optical head, for instance a motion of translation or a vibration movement, degrades rapidly the optical signal because of the integration process of the receiver that has to be used in this kind of scheme; consequently this disadvantage makes the approach hardly applicable to the production line control where both the material to measure and the system carrying out are in motion.

Moreover such instruments are made up by an optical part that has to be placed in proximity to the object to measure and that links up, usually through a cable, with an external processing unit that includes amplification means, processing means and, in case of an instrument based on TD technique, a position and movement unit control of the reference arm too. This involves further installation difficulties especially in case the system has to be mounted on board of a production line.

US 2005/0151977 A1 discloses measuring the thickness across a moving length of material, using an algorithm comprising a Hilbert transform and a threshold condition.

### Aims and Summary of the Invention

Aim of this invention is to propose a non-invasive and non-contact thickness measurement instrument, which uses an optical non-ionizing source for a thin film thickness measurement and an optical measurement technique.

Another aim is to propose an instrument based on a low-coherence interferometric approach, but with a simplified optical scheme so that it turns out to be more robust, insensitive to vibrations and displacements of the object to measure, more economic and easy to assemble and that turns out to be more compact and simple to install into production lines as well.

Said aims and the implicit advantages are achieved with a measuring instrument according to claim 2 and with a measuring method according to claim 1.

In fact, with respect to the classic implementation of a low-coherence interferometer of the frequency-domain FD type, it can be seen that the mutual interference component or signal also contains information about the structure of the sample under examination since it results from the interaction among the various reflections that are present inside the sample; thus the applicant thought to use exactly this component to obtain the thickness measurement.

As a matter of fact, considering the case of a simple structure as the one of a single layer film, the optical interface sequence is made up only by two terms, that is by the air-film interface and the film-air interface and the mutual-interference signal is made up by an only term that is proportional to the distance between the two interfaces, i.e. to the total thickness.

In case of multilayer structures this signal proves to be more complex to analyse, but most of the extruded films, in the field of plastic production plants, for instance, have typically 3 or 5 layers with a symmetric distribution; this feature makes the mutual-interference signal easier to analyze and, inside this signal, makes the film total thickness information, i.e. the one resulting from the interaction between the entry interface (air-film) and the exit interface (film-air), of dominant intensity i.e. having greater visibility than the components, which are, on the contrary, caused by the interactions of the optical interfaces, level with the inner layers.

Moreover this signal, as only produced by the components reflected inside the material, is robust to vibrations or movement of the material under measurement with regard to the optical head, and it is present without the reference arm as well; this allows a simplified optical carrying out, which does not require critical alignments to obtain the spatial superimposition of the optical beams coming back from the reference and measurement arm.

However, the mutual-interference signal is characterised by a lower intensity than the other components; in order to overcome this disadvantage the optical scheme, which can produce a signal that can be used for carrying out the thickness measurement, has been implemented with an appropriate choice of the optoelectronic components, whose features must be such as to be able to maximize this signal.

### Brief Description of the Drawings

The invention will be moreover illustrated more in detail in the following description made with reference to the enclosed exemplifying and non-limiting drawings, where:
Figs. 1 and 2 show schemes of interferometers according to the technology in the prior art reported above;
Fig. 3 is a flowchart of the measuring instrument according to the invention; and
Fig. 4 schematically shows the measuring instrument applied to a film production line.

### Detailed Description of the Invention

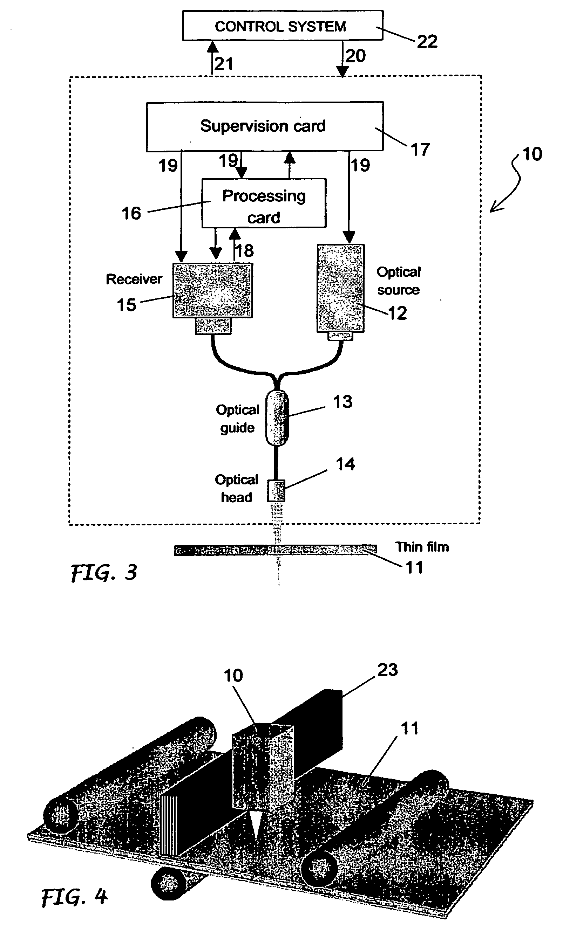

In Figs. 3 and 4 a thickness measurement instrument 10 and a film 11 in an optical transparent for semi-transparent material to measure are represented.

The instrument includes, inside a housing, an optical source light 12 fitted to emit a light radiation and to produce a light beam, an optical guide 13, an optical head 14, a receiver 15, a processing card 16 and a supervision card 17.

The optical source is formed by a source that can emit a light radiation with a broad spectral width, characterised by a low temporal coherence and if possible by a high spatial coherence; it is possible to use a halogen lamp for example, but also sources based on LED, superluminescent diodes, Xenon lamps or Mercury-Argon lamps. Furthermore, it comprises elements able to form a light beam that can be carried through the optical guide towards the thin film to measure.

The optical guide 13 sees to direct the light beam produced by the source towards the film 11 under measurement and to collect and transport towards the receiver 15 a reflected optical beam, which contains the light components reflected by the film. The optical guide must be designed to allow an optimum spatial superimposition of the reflected components; for instance, it can be made up by an optic multi-track fibre with a configuration of M around 1, where M is equivalent to the number of the fibres that transmit the light beam towards the film to measure and that are arranged around a central fibre for the collection of the reflected components.

The optical head 14 comprises the optical elements, substantially made up by a finite number of lenses, necessary to shape an incident optical beam for lighting up the film and assuring its focalization in a determinate work distance. The components must be chosen considering the possibility that the film, for instance in a plant for extrusion of plastic materials, travels at high speed and therefore is subject to high amplitude vibrations. Part of the optical beam incident onto the film is reflected by the air-film and film-air interfaces and maybe the interfaces inside the film. The optical head allows then to spatially superimpose the various reflected components and to produce the reflected optical beam that has to be sent to the receiver through the optical guide.

The receiver 15 receives as input the reflected optical beam, turns it into an electric signal, amplifies it and converts it into a digital output signal 18, in form of data set, that has to be transmitted to the processing card. The device is able to spatially separate the spectral components of the reflected optical beam and to provide an electric signal proportional to the intensity of each component and is made up by a series of input optical elements that give appropriate spatial features to the reflected optical beam transmitted by the optical guide, followed by an optical element that is able to spatially separate the various spectral components of the reflected optical beam and by a further series of input optical elements in order to focus the various spectral components towards a series of photodetectors. These ones convert each spectral component into an electric signal through an integration process and are followed by a series of amplification and electronic filtering stages of the produced signals fitted to produce the digital signal 18. The optical operation features of the receiver univocally determine the main metrological features and the accuracy of the whole measurement system; consequently the optical configuration of this element proves to be determining for the operation of the whole system.

The processing card 16 receives the digital signal 18 and executes the mathematical operations necessary to the film thickness calculation. It is a microprocessor card which sees to the receiver driving and querying; the receiver answers every query by sending a data package composed of a N number of data equivalent to the intensity of every spectral component that the receiver can turn. Every data package is then processed by the processing card in order to obtain the thickness information and is used to calculate various quality parameters that can be used as indicators of the signal-to-noise ratio and of the correct operation of the whole system, with particular attention to the optical scheme that must produce the mutual-interference signal.

The data processing, through the aforesaid processing card 16, comprises the following steps:
- elimination of the spectral components whose intensity is lower than a predetermined threshold on the basis of experimental evidences;
- elimination of possible signal discontinuities, produced by the previous stage, through filtering and windowing operations;
- conversion of the signal intensity from the wavelengths' domain into the optical frequencies' domain, in order to be able to process the optical signal;
- procedures of interpolating and resampling for signal quality increasing;
- analysis of the frequency domain components of the intensity in order to extract the mutual-interference signal;
- filtering of the obtained mutual-interference signal, extraction of the dominant components and analysis of them in order to find univocally the signal relevant to the film thickness;
- calculation of the signal-to-noise ratio of the executed measurement and, in case, rejection of the measure if the quality index is lower than a predetermined threshold; and
- calculation of the quality parameters associated with the measure itself.

The supervision card 17 produces a driving signal 19 for controlling the power-on and the shut-down of the optical source, the receiver and the processing card. Moreover the supervision card appropriately manages the input/output data stream through an input power-supply line 20 and an output data transmission line 21. Furthermore this card has a control function, also said watch-dog function, over the processing card and the receiver in order to assure a correct data stream. In case of persistent error, of non-communication with the control card or with the receiver or of an insufficient number of data with adequate signal-to-noise ratio the supervision card produces a series of alarm signals, fitted to distinguish and identify the various events that have happened and sends them into the data transmission line.

The instrument can be interfaced with a display - non-represented-to real-time display the thickness information and the possible alarm signals, sent through the data transmission line 21 and/or, if associated with a production line, to a plant control system 22. In case of an alarm signal the control system can communicate non- or bad operation of the instrument to interrupt manually or automatically a possible feedback control, for instance if the thickness datum is used as real-time process control.

The instrument can be applied to the production line by means of a support 23 and be moved in relation to the film both in linear way as shown id Fig. 4 and in case of blown film extrusion - non-represented - in rotation around the film.

## Claims

1. Method for optical measuring of the thickness of elements in form of films of transparent or semitransparent materials including the steps of:
a) illuminating the element to measure;
b) measuring the optical intensity of the light radiation retrodiffused by the element to measure;
further **characterized by** the steps of:
c) eliminating spectral components with intensity lower than a predetermined threshold;
d) eliminating possible signal discontinuities, produced by the preceding step, through filtering and windowing operations;
e) converting the signal intensity from the wavelengths' domain into the optical frequencies' domain;
f) signal interpolating and resampling for quality increasing;
g) analysing the intensity components in order to extract a mutual-interference signal;
h) filtering the obtained mutual-interference signal;
i) extracting the dominant components and analysing them in order to find univocally a signal which is indicative of the thickness of the element to measure;
l) calculating the signal-to-noise ratio of the executed measurement;
m) in case, rejecting the obtained measure if it has a signal-to-noise ratio lower than a predetermined threshold; and
n) calculating quality parameters associated with the measure itself.

2. Instrument for optical thickness measuring of elements in form of films of transparent or semitransparent materials, with the method according to claim 1, comprising in combination optical lighting components adapted to actuate step a), optical signal receiving component adapted to actuate step b), control and supervisor components adapted to actuate steps c) to n) **characterized in that** said components are integrated and contained in a sole body.

3. Measuring instrument according to claim 2, **characterized in that** it is as a whole applicable to a production line of the material that has to be measured both in fixed and dynamic position and it is interfaced with remote display interface.

4. Measuring instrument according to claim 2 or 3, **characterized in that** it is interfaced and interacting with a control system of the operating of the production line it is connected with.

5. Measuring instrument according to claim 2, 3 or 4, **characterized in that** it comprises in combination an optical source (12) for the emission of a light radiation with low temporal coherence and high spatial coherence and for the forming of an optical beam, an optical guide (13) for receiving and guiding the optical beam from said optical source towards an optical head (14) having some lenses intended for focusing the optical beam on the film material that has to be measured and for giving rise to a reflection of a beam of optical components from the film product towards the optical head, the optical head being shaped to get the retroreflected optic components superimposed spatially, and a receiver (15) intended for getting the optical beam received by said optical guide and for giving a thickness digital reading signal, in connection with control and supervisor components.

6. Measuring instrument according to claim 5, **characterized in that** the receiver comprises means to separate spatially the spectral components of the optical beam reflected by the film product, means to direct the separate spectral components towards a photodetector element series for a conversion of every spectral component into an electric signal proportional to every spectral component's intensity and a series of electronic amplification and filtering stages of the resulting signals.

7. Measuring instrument according to claims 5 and 6, **characterized in that** the control and supervisor means include a processing board (16) for processing every digital signal transmitted by the receiver and for calculating the film's thickness and a supervisor card (17) for optical source, optical head and receiver driving and for generating a data communication signal.

8. Measuring instrument according to claim 7, **characterized in that** the processing board is a microprocessor card for driving and feedback controlling the receiver, processing the digital signal transmitted by the receiver and getting the thickness information and for calculating quality parameters indicative of the signal-to-noise ratio and of the instrument correct working.

9. Measuring instrument according to claim 7, **characterized in that** the supervisor card control the data stream towards the display interface and/or the control system of the film product's production line through the data communication signal, and performs a control function of optical source, processing card and receiver in order to assure that the data stream is correct and in order to generate alarm signals indicative of errors, of non-communication with processing card and receiver, or of an insufficient number of data with adequate signal-to-noise ratio to send to the display interface and/or to the control system through the data communication signal.

10. Measuring instrument according to claim 5, wherein the optical source can be formed by a halogen lamp, LED sources, superluminescent diodes, a Xenon lamp, or a Mercury-Argon lamp.

## Patentansprüche

1. Verfahren zur optischen Dickenmessung von Elementen in Form von Filmen oder durchsichtigen oder halbdurchsichtigen Materialien, umfassend die Schritte:
a) Beleuchten des zu messenden Elements;
b) Messen der optischen Intensität der von dem zu messenden Element rückgestreuten Lichtstrahlung;
weiter **gekennzeichnet durch** die Schritte:
c) Unterdrückung von Spektralkomponenten mit einer Intensität, die kleiner als ein vorgegebener Schwellenwert ist;
d) Unterdrückung von möglichen Signal-Diskontinuitäten, die **durch** den vorhergehenden Schritt hervorgerufen wurden, mittels Filterungs- und Fensterungsverfahren;
e) Umwandlung der Signalintensität vom Wellenlängenbereich im optischen Frequenzbereich;
f) Signalinterpolieren und - wiederabtasten zur Erhöhung der Qualität;
g) Auswertung der Intensitätskomponenten zum Extrahieren eines Gegenseitig-Interferenzsignals;
h) Filterung des erhaltenen Gegenseitig-Interferzenzsignals;
i) Extrahieren und Analysieren der dominanten Komponenten um eindeutig ein Signal zu finden, das die Dicke des zu messenden Elements anzeigt;
l) Berechnen des Signal-Rausch-Verhältnisses der durchgeführten Messung;
m) fallweise, Verwerfen der erhaltenen Messung, wenn das Signal-Rausch-Verhältnis tiefer als ein vorgeschriebener Schwellenwert liegt; und
n) Berechnen von Qualitätsparametern, denen die Messung selbst zugeordnet wird.

2. Instrument zur optischen Dickenmessung von Elementen in Form von Filmen oder durchsichtigen oder halbdurchsichtigen Materialien mit dem Verfahren nach Anspruch 1, umfassend - in Kombination miteinander - optische Leucht-Bauelemente, die zur Durchfahrung des Schrittes a) ausgelegt sind, ein zur Durchführung des Schrittes b) ausgelegtes optisches Signal-Empfangsbauelement, zur Durchführung der Schritte c) bis n) ausgelegte Steuer- und Überwachungs-Bauelemente, **dadurch gekennzeichnet, dass** die besagten Bauelemente in einem Sohlenkörper integriert und enthalten sind.

3. Messinstrument nach Anspruch 2, **dadurch gekennzeichnet, dass** es als Ganzes in einer Produktionslinie für das zu messende Material in einer festen und dynamischen Stellung verwendbar ist und an einer Fernanzeige-Sclmittstelle schnittstellenverbunden ist.

4. Messinstrument nach Anspruch 2 oder 3, **dadurch gekennzeichnet, dass** es mit einem Steuersystem der damit verbundenen Produktionslinie-Kontrolle schnittstellenverbunden und interaktiv verbunden ist.

5. Messinstrument nach Anspruch 2, 3 oder 4, **dadurch gekennzeichnet, dass** es umfasst - in Kombination miteinander - eine optische Quelle (12) zur Emission einer Lichtstrahlung mit niedriger zeitlicher Kohärenz und hoher räumlicher Kohärenz und zum Formen eines optischen Strahles, einen optischen Leiter (13) zum Empfangen und Führen des optischen Strahles von der besagten optischen Quelle zu einem optischen Kopf (14), der einige Linsen aufweist, die zur Fokussierung des optischen Strahles auf dem zu messenden Folienmaterial vorgesehen sind, und zum Bewirken einer Reflexion eines Strahles von optischen Bauelementen vom Foliengut zum optischen Kopf, wobei der optische Kopf so geformt ist, um die retroreflektierten optischen Bauelemente räumlich zu überlagern, und einen Empfänger (15), der zum Empfangen des optischen Strahles von der besagten optischen Führung und zum Ausgeben eines digitalen Dicken-Lesesignals in Verbindung mit den Steuer- und Übenvachungs-Bauelementen ausgelegt ist.

6. Messinstrument nach Anspruch 5, **dadurch gekennzeichnet, dass** der Empfänger Mittel zur räumlichen Trennung der Spektralkomponenten des vom Folienprodukt zurückgestrahlten optischen Strahles aufweist, Mittel zur Leitung der getrennten Spektralkomponenten in Richtung einer Serie von Lichtdetektorelementen zum Umwandeln jeder Spektrallcomponente in ein elektrisches Signal, das proportional zu jeder Intensität der Spektralkomponente ist, und eine Serie von elektronischen Verstärkungs- und Filterungsstufen des resultierenden Signals aufweist.

7. Messinstrument nach Anspruch 5 und 6, **dadurch gekennzeichnet, dass** die Steuer- und Überwachungsmittel eine Verarbeitungskarte (16) zum Verarbeiten eines jeden vom Empfänger übertragenen Digitalsignals sowie zum Berechnen der Foliendicke und eine Überwachungskarte (17) zum Treiben der optischen Quelle, des optischen Kopfes und des Empfängers sowie zum Erzeugen eines Datenkommunikationssignals enthalten.

8. Messinstrument nach Anspruch 7, **dadurch gekennzeichnet, dass** die Verarbeitungskarte eine Mikroprozessorkarte ist zum Treiben und zur Rückwirkungssteuerung des Empfängers, zur Verarbeitung des vom Empfänger übertragenen Digitalsignals und zum Erhalten der Dickeninformation und zum Berechnen von Qualitätsparametern, die für das Signal-Rausch-Verhältnis und für die korrekte Arbeitsweise des Instrumentes anzeigend sind.

9. Messinstrument nach Anspruch 7, **dadurch gekennzeichnet, dass** die Überwachungskarte den Datenfluss zur Anzeigeschnittstelle und/oder zum Steuersystem der Folienprodukt-Produktionslinie durch das Datenkommunikationssignal steuert und eine Kontrollfunktion der optischen Quelle, der Verarbeitungskarte und des Empfängers ausübt, um zu gewährleisten, dass der Datenfluss korrekt ist und um Alarmsignale zu erzeugen, die für Fehler, für die Nicht-Kommunikation mit der Verarbeitungskarte und dem Empfänger oder für eine unzureichende Zahl von Daten mit einem an die Übertragung zur Anzeigeschnittstelle und/oder zum Steuersystem durch das Datenkommunikationssignal angepassten Signal-Rausch-Verhältnis anzeigend sind.

10. Messinstrument nach Anspruch 5, wobei die optische Quelle von einer Halogenlampe, von LED-Quellen, von superlumineszierenden Dioden, von einer Xenon-Lampe oder von einer Quecksilber-Argon-Lampe gebildet werden kann.

## Revendications

1. Méthode de mesure optique de l'épaisseur des éléments sous forme des pellicules en matériaux transparents où semi-transparents comprenant les étapes de:
a) illuminer l'élément à mesurer;
b) mesurer l'intensité optique du rayonnement de lumière rétrodiffusé par l'élément à mesurer;
**caractérisé en outre par** les étapes de:
c) éliminer les composants spectraux avec une intensité inférieure à un seuil prédéterminé;
d) éliminer les possible discontinuités du signal, produites par l'étape précédente, grâce à des opérations de filtrage et de fenêtrage;
e) convertir l'intensité du signal à partir du domaine de la longueur d'onde dans le domaine des fréquences optiques ;
f) interpoler et rééchantilloner pour accroître la qualité;
g) analyser l'intensité des composants afin d'extraire un signal d'interterence réciproque;
h) filtrer le signal d'interférence réciproque obtenu;
i) extraire les composants dominantes et les analyser afin de trouver univoquement un signal qui soit indicatif de l'épaisseur de l'élément à mesurer;
l) calculer le rapport signal-sur-bruit de la mesure exécutée;
m) éventuellement, rejeter la mesure obtenue si le rapport signal-sur-bruit est inférieur à un seuil prédéterminé, et
n) calculer les paramètres de qualité associés à la mesure elle-.

2. Instrument pour mesurer l'épaisseur optiquement des éléments sous forme des pellicules en matériaux transparents où semi-transparents, avec le méthode selon la revendication 1, comprenant, en association, des éléments optiques d'illumination adaptés pour entamer l'étape a), un élément de réception d'un signal optique adapté pour entamer l'étape h), des éléments de commande et supervision adaptés pour entamer les étapes de c) à n) **caractérisé en ce que** lesdits éléments sont intégrés et contenus dans un corps unique.

3. Instrument de mesure selon la revendication 2, **caractérisé en ce qu'**il est entièrement applicable à une ligne de production du matériau qui doit être mesuré dans une position fixe et aussi dans une position dynamique et **en ce qu'**il s'interface à une interface de visualisation à distance.

4. Instrument de mesure selon la revendication 2 où 3, **caractérisé en ce qu'**il s'interface et interagit avec un système de commande du fonctionnement de la ligne de production avec laquelle il est connecté.

5. Instrument de mesure selon la revendication 2, 3 où 4, **caractérisé en ce qu'**il comprend, en association, une source optique (12) pour l'émission d'un rayonnement de lumière à faible cohérence temporelle et à cohérence spatiale élevée et pour former un faisceau optique, un guide optique (13) pour recevoir et guider le faisceau optique à partir de ladite source optique vers une tête optique (14) ayant des lentilles destinées à focaliser le faisceau optique sur le matériau en pellicule qui doit être mesuré et à donner lieu à une réflexion d'un faisceau d'éléments optiques à partir du produit en pellicule vers la tête optique, la tête optique étant conformée pour porter les éléments optiques rétrorénéchis à se superposer spatialement, et un récepteur (15) destiné à porter le faisceau optique à être reçu par ledit guide optique et à donner un signal de lecture numérique de l'épaisseur, en lien avec les éléments de commande et supervision.

6. Instrument de mesure selon la revendication 5, **caractérisé en ce que** le récepteur comprend des moyens pour séparer spatialement les composants spectraux du faisceau optique réfléchi par le produit en pellicule, des moyens pour diriger les composants spectraux séparés vers une série d'éléments photodétecteurs pour transformer chaque composant spectral en un signal électrique proportionnel à l'intensité de chaque composant spectral et une série des étapes d'amplification et filtrage électronique des signaux résultants.

7. Instrument de mesure selon les revendications 5 et 6, **caractérisé en ce que** les moyens de commande et supervision comprennent une carte de traitement (16) pour traiter chaque signal numérique émis par le récepteur et pour calculer l'épaisseur du pellicule, et une carte de supervision (17) pour actionner la source optique, la tête optique et le récepteur et pour produire un signal de transmission des données.

8. Instrument de mesure selon la revendication 7, **caractérisé en ce que** la carte de traitement est une carte à microprocesseur pour actionner et commander par rétroaction le récepteur, traiter le signal numérique émis par le récepteur et obtenir les informations sur l'épaisseur et pour calculer les paramètres de qualité indicatives du rapport signal-sur-bruit et du correct fonctionnement de l'instrument.

9. Instrument de mesure selon la revendication 7, **caractérisé en ce que** la carte de supervision commande le flux des données vers l'interface de visualisation et/où le système de commande de la ligne de production du produit en pellicule à travers le signal de transmission des données, et remplit une fonction de commande de la source optique, de la carte de traitement et du récepteur afin d'assurer que le flux des données soit correct et afin de générer des signaux d'alarme indicatifs des erreurs dus à la non-communication avec la carte de traitement et le récepteur, où dus au nombre insuffisant des données ayant un rapport signal-sur-bruit adéquat à envoyer à l'interface de visualisation et/où au système de commande à travers le signal de communication des données.

10. Instruments de mesure selon la revendication 5, dans lequel la source optique peut être formée par une lampe à halogène, des sources LED, des diodes superluminescentes, une lampe au xénon, où une lampe à mercure-argon.
